# EUROPÄISCHE PATENTANMELDUNG

(11) **EP 3 490 115 A1**
(43) Veröffentlichungstag der Anmeldung: **29.05.2019**
(21) Anmeldenummer: 17203949.7
(22) Anmeldetag: 28.11.2017
(51) Int. Cl.: H02K 5/22, H02K 5/15

(54) **INTEGRIERTER KLEMMENKASTEN EINER ROTATORISCHEN DYNAMOELEKTRISCHEN MASCHINE**

(71) Anmelder: Siemens Aktiengesellschaft, 80333 München (DE)
(72) Erfinder: Schmidt, Valerias, 90471 Nürnberg (DE)

(57) **Zusammenfassung**

Die Erfindung betrifft eine rotatorische dynamoelektrische Maschine (1) mit einem ein- oder mehrphasigen Wicklungssystem (2), das in einem Stator (3) angeordnet ist, wobei zumindest dessen Wicklungsanschlussleitungen (6) in einen Klemmenkasten (23) geführt sind und dort mit externen Anschlussleitungen (13) kontaktierbar sind, wobei sich der Klemmenkasten (23) im Bereich der Stirnseite des Stators (3) befindet, in ein Gehäuse (9) des Stators (3) eingelassen ist und sich axial zwischen Stator (3) und einem Lagerschild (5) angeordnet ist.

## Beschreibung

Die Erfindung eine rotatorische dynamoelektrische Maschine mit einem ein- oder mehrphasigen Wicklungssystem in einem Stator wobei zumindest dessen Wicklungsanschlussleitungen in einem Klemmenkasten geführt sind um dort mit externen Anschlussleitungen kontaktierbar sind.

Rotatorische dynamoelektrische Maschinen sind in vielen Anwendungsgebieten im Einsatz. Beispielsweise in der Fahrzeugtechnik, bei Triebzügen, bei elektrisch angetriebenen Fahrzeugen, Straßenbahnen, Mining-Anwendungen als auch Mining-Trucks. Dort ist ein radial und axial begrenzter Einbauraum für die Antriebstechnik zur Verfügung. Es muss jedoch gewährleistet sein, dass auch dort gewisse Wartungsarbeiten in einfacher Art und Weise ausgeführt werden können. Erschwerend kommt hinzu, dass andere elektrische Betriebsmittel Anbauelemente den Zugang zu Wartungsarbeiten zur dynamoelektrischen Maschine zusätzlich erschweren. So sind z.B. Anschlussleitungen dynamoelektrischer Maschinen zu wechseln ohne aufwändig das gesamte Antriebssystem zerlegen zu müssen.

Anschlussleitungen werden üblicherweise über einen Klemmenkasten am Gehäuse der dynamoelektrischen Maschine in radialer Ausrichtung positioniert. Nachteilig dabei ist, dass ein vergleichsweise großer radialer Einbauraum zur Verfügung gestellt werden muss, um die oben genannten Wartungs- und Anschlussarbeiten an der dynamoelektrischen Maschine ausführen zu können. Dies reduziert die Kompaktheit des gesamten Antriebssystems, insbesondere bei den oben genannten Anwendungen.

Ausgehend davon liegt der Erfindung die Aufgabe zugrunde, eine rotatorische dynamoelektrische Maschine zu schaffen, die bei vergleichsweise geringem Einbauraum in einfacher Art und Weise Wartungs- und Anschlussarbeiten an der dynamoelektrischen Maschine zulässt.

Die Lösung der gestellten Aufgabe gelingt durch eine rotatorische dynamoelektrische Maschine mit einem ein- oder mehrphasigen Wicklungssystem, das in einem Stator angeordnet ist, wobei zumindest dessen Wicklungsanschlussleitungen in einen Klemmenkasten geführt sind und dort mit externen Anschlussleitungen kontaktierbar sind, wobei sich der Klemmenkasten im Bereich der Stirnseite des Stators befindet, in ein Gehäuse des Stators eingelassen ist und sich axial zwischen Stator und einem Lagerschild angeordnet ist.

Erfindungsgemäß wird nunmehr der Klemmenkasten, der für die Kontaktierbarkeit der Wicklungsanschlussleitungen und der externen Anschlussleitungen notwendig ist, ins Innere der elektrischen Maschine verlegt. In dem Klemmenkasten können ebenso Sensorleitungen aus der dynamoelektrischen Maschine geführt und dort abgelegt sein, um in einfacher Art und Weise derartige Daten auch aus dem Motor über diesen Klemmenkasten abgreifen zu können. Des Weiteren kann sich in diesen Klemmenkasten auch ebenso ein Webserver befinden, der die Daten in an sich bekannter Art und Weise an übergeordnete Warten oder andere Einheiten weiterleitet.

Damit ist nun eine äußerst kompakte dynamoelektrische Maschine geschaffen, die mit ihrem Einbauraum lediglich nunmehr - vor allem radial betrachtet - die elektromagnetischen Grundelemente der dynamoelektrischen Maschine, wie z.B. den Stator ggf. mit Gehäuse aufweist. Des Weiteren wird durch den erfindungsgemäßen Aufbau und die Anordnung des Klemmenkastens gewährleistet, dass externe Anschlussleitungen austauschbar sind, ohne ein Lagerschild abnehmen zu müssen.

Der Klemmenkasten wird nunmehr im Wesentlichen durch ein Schalenelement im Bereich des Stators, das Lagerschild an einer Stirnseite des Schalenelements und einen bezüglich der Motorachse radial äußeren Deckels gebildet. Durch die Anordnung und den Aufbau des Klemmenkastens wird nunmehr in einfacher Art und Weise auch die Herstellung der gesamten dynamoelektrischen Maschine vereinfacht. Dabei wird die Isolierung der Wicklungsanschlussleitungen, die als Anschlussschienen ausgeführt sind und zusammen mit den Lötstellen, d.h. der Kontaktierung der Anschlussschienen zum Wicklungssystem zusammen isoliert und imprägniert.

Mit anderen Worten: Die Wicklungsanschlussleitungen werden somit gemeinsam mit der Wicklung imprägniert. Somit erübrigen sich alle nachträglichen Arbeiten, wie Löten, Bandisolierung und das händische Tränken mit einem Harzgemisch, die üblicherweise mit den Wicklungsanschlussleitungen normalerweise noch zu vollziehen sind. Dies reduziert außerdem die Fehlerquote der Isolierung zwischen den Wicklungsanschlussleitungen und den Wicklungsanschlüssen.

Vor allem bei einer metallichen Ausführung des Schalenelements werden die Wicklungsanschlussleitungen durch einen oder mehrere Isolatoren am Schalenelement abgestützt. Auch falls das Schalenelement aus einem Isolierteil gefertigt werden sein sollte, sind derartige Isolatoren aus mechanischen Gründen zur Abstützung vorteilhaft.

Die Wicklungsanschlussleitungen werden aufgrund der zu übertragenden Ströme in die dynamoelektrische Maschine bei vergleichsweise hoher Leistung - mehrere 100 KW - als Schienen ausgeführt.

Um den Aufbau und die Montierbarkeit innerhalb des Klemmenkastens zu vereinfachen, werden die externen Anschlussleitungen aus im wesentlichen axialer Richtung durch dementsprechende Öffnungen des Lagerschildes in den Klemmenkasten geführt und dort zusammen mit ihren jeweiligen Wicklungsanschlussleitungen kontaktiert. Dies geschieht vorzugsweise durch dementsprechende Schraubverbindungen auf dementsprechend ausgestatteten Isolatoren, die sich am Schalenelement abstützen.

Derartige kompakte dynamoelektrische Maschinen eignen sich für Fahrzeugantriebe aller Art, wie sie bei elektrischen Bahne, Mining-Trucks oder E-Bussen zum Einsatz kommen. Ebenso sind diese Maschinen als Antriebe von Werkzeugmaschinen, Pumpen oder Kompressoren geeignet.

Als Kühlkonzepte für diese Maschinen eignen sich Luft- und/oder Flüssigkeitskühlung, deren Anschlüsse (Ein- und Auslässe) optional ebenso über Öffnungen im Lagerschild - vorzugsweise auf der gleichen Seite wie die externen Anschlussleitungen - angeordnet sind. Damit lässt sich dieses Kühlkonzept auch einfach in bestehende Kühlkonzepte des gesamten Antriebs, also Maschine und Umrichter und/oder der Gesamtanlage (Antrieb und Arbeitsmaschine)integrieren.

Die Erfindung sowie wesentliche Ausgestaltungen der Erfindung werden anhand prinzipiell dargestellter Ausführungsbeispiele näher erläutert. Darin zeigen:
- FIG 1: eine Seitenansicht einer dynamoelektrischen Maschine,
- FIG 2: eine perspektivische Ansicht der dynamoelektrischen Maschine,
- FIG 3: eine Detailansicht der Stirnseite der dynamoelektrischen Maschine,
- FIG 4: eine Detailansicht in radialer Richtung,
- FIG 5: eine perspektivische Detailansicht eines aufgeschnittenen Klemmenkastens,
- FIG 6: eine weitere Detailansicht des Klemmenkastens,
- FIG 7: eine Detailansicht des Klemmenkastens,
- FIG 8: eine Detailansicht des Klemmenkastens,
- FIG 9: eine Detailansicht des Gehäuses der dynamoelektrischen Maschine,
- FIG 10: eine Detailansicht der Wicklungsanschlussleitungen,
- FIG 11: eine Darstellung der Halbschale am Gehäuse,
- FIG 12: eine weitere Darstellung der Halbschale am Gehäuse,
- FIG 13: eine Darstellung der Halbschale mit angesetztem Lagerschild,
- FIG 14: eine radiale Ansicht der Halbschale ohne externe Anschlussleitungen.

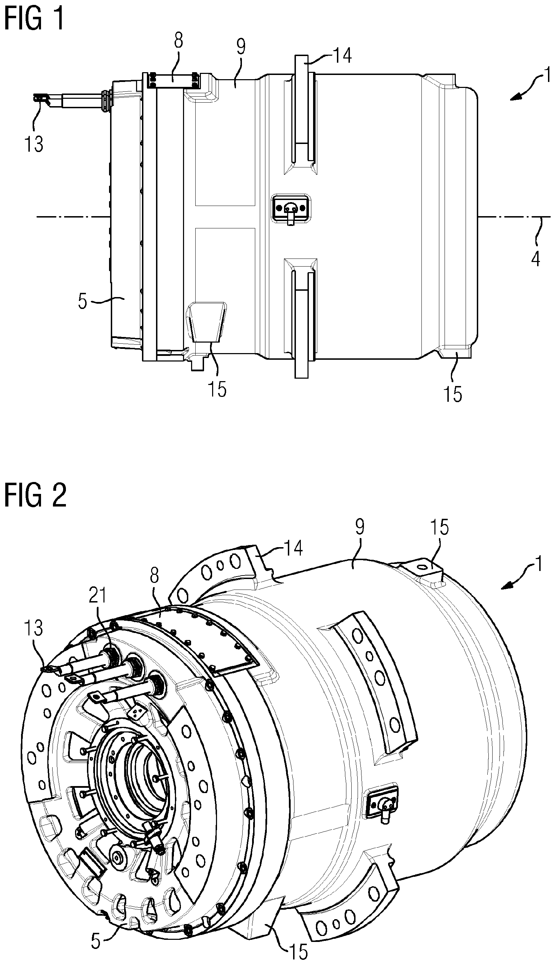

FIG 1 zeigt in einer Seitenansicht eine dynamoelektrische Maschine 1, deren externe Anschlussleitungen 13 parallel zu einer Achse 4 durch ein Lagerschild 5 in die dynamoelektrische Maschine 1 ragen. Im mittleren Bereich des Gehäuses 9 der dynamoelektrischen Maschine 1 befinden sich in Umfangsrichtung betrachtet abschnittsweise Flanschelemente 14, durch die die Maschine 1 in einem dafür vorgesehenen Einbauraum eines Fahrzeugs oder einer Werkzeugmaschine angeordnet und positioniert wird. Optional weitere Befestigungsstellen 15 lassen zusätzliche Fixierpunkte in einem dementsprechend ausgestalteten Einbauraum zu.

FIG 2 zeigt die dynamoelektrische Maschine 1 in einer perspektivischen Darstellung, wobei diese Ansicht einen Deckel 8 eines internen, in dieser Darstellung noch nicht sichtbaren Klemmenkastens 23 zeigt. Durch das Lagerschild 5 reichen in diesem Fall die externen Anschlussleitungen 13, in diesen Fall drei Stück, für jede elektrische Phase eine Anschlussleitung.

Pro Phase sind optional auch mehrere Leitungen anordenbar und/oder es ist ebenso vorstellbar, dass nicht näher dargestellte Datenleitungen aus dem Klemmenkasten 23 axial über Öffnungen des Lagerschildes 5 nach außen geführt sind.

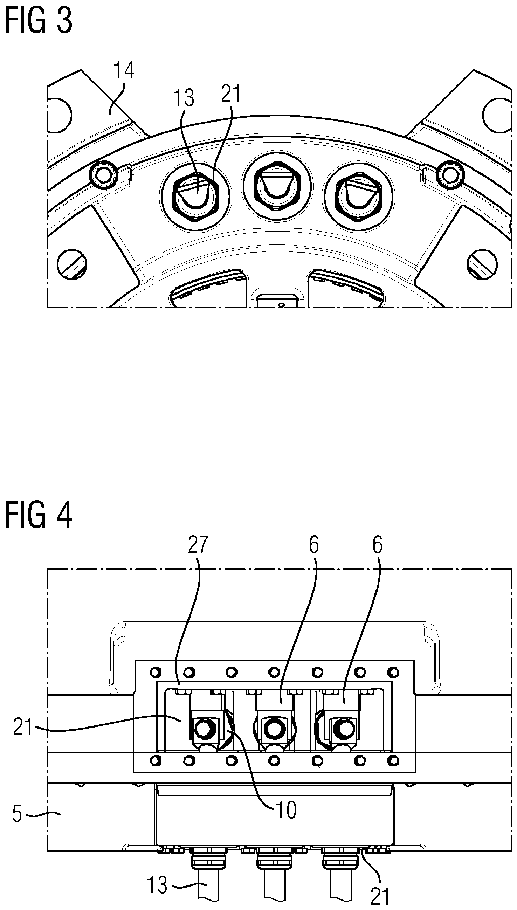

FIG 3 zeigt in einer Detailansicht den Bereich des Lagerschildes 5, an dem die Anschlussleitungen 13 achsparallel ausgeführt sind und durch das Lagerschild 5 geführt sind.

FIG 4 zeigt in einer radial zur Achse 4 gerichteten Blickrichtung bei offenem Deckel 8 das Innere des Klemmenkastens 23. Der Klemmenkasten 23 wird dabei durch ein Schalenelement 27 und das Lagerschild 5 gebildet. Es sind die Wicklungsanschlussleitungen 6 aus dem Inneren der Maschine 1 zu sehen, die auf einem Isolator 10 abgelegt sind und von dort mit den externen Anschlussleitungen 13 kontaktierbar sind.

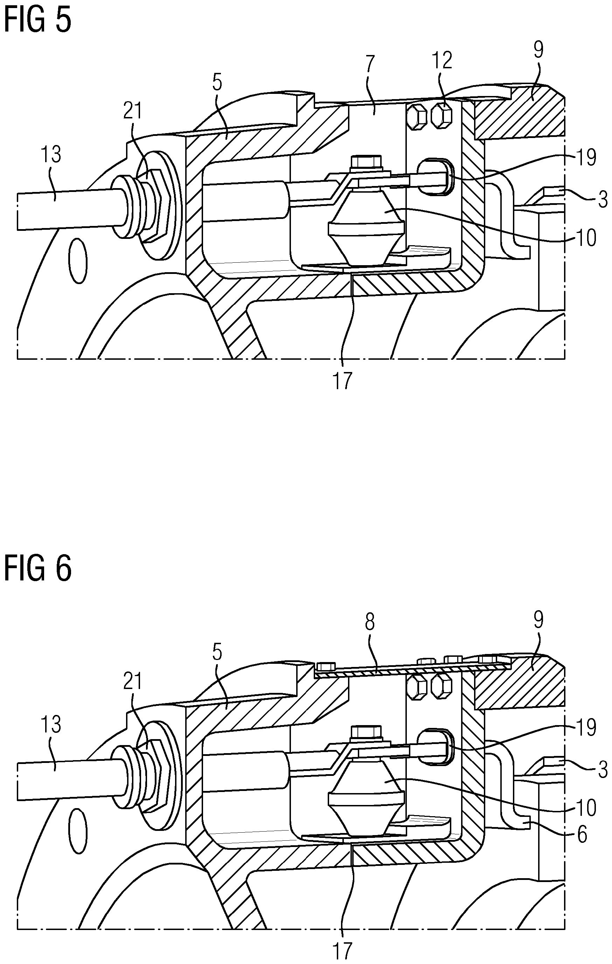

In den prinzipiellen Darstellungen der Figuren 5 bis 7 ist aus Gründen der Übersichtlichkeit nur eine elektrische Phase dargestellt.

FIG 5 zeigt in einer perspektivischen Schnitt-Darstellung die Anordnung gemäß FIG 4 für eine Phase, wobei die Wicklungsanschlussleitungen 6 aus dem Inneren der dynamoelektrischen Maschine 1 ragen und wobei in diesem Fall die Wicklungsanschlussleitungen 6 als Schienen ausgeführt sind. Das Schalenelement 7 ist dabei am Gehäuse 9 der dynamoelektrischen Maschine 1 mittels Schrauben 12 angebracht und fixiert. Der Isolator 10 stützt sich am Schalenelement 7 ab. Die Wicklungsanschlussleitung 6 und die externe Anschlussleitung 3 sind in diesem Fall beispielhaft dargestellt, wie sie auf dem Isolator 6 kontaktierbar sind. Diese Kontaktierung erfolgt mittels einer Schraube und dementsprechenden Unterlegscheiben.

Der Klemmenkasten 23 wird dabei gebildet durch das Schalenelement 7, einen Deckel 8 und ein dementsprechend gestaltetes Lagerschild 5. Wobei das Schalenelement 7 durch dementsprechende Befestigung 12 am Gehäuse 9 gehalten ist. Zwischen Schalenelement 7 und Lagerschild 5 ist eine Abdichtung 17 vorgesehen, um die Maschine 1 auch in industriell rauer Umgebung betreiben zu können.

FIG 6 zeigt nunmehr wie der Deckel 8 das Innere des Klemmenkastens 23 radial nach außen abdichtet, in dem dieser durch dementsprechende Schraubverbindungen am Gehäuse 9 bzw. Lagerschild 5 festgeschraubt ist.

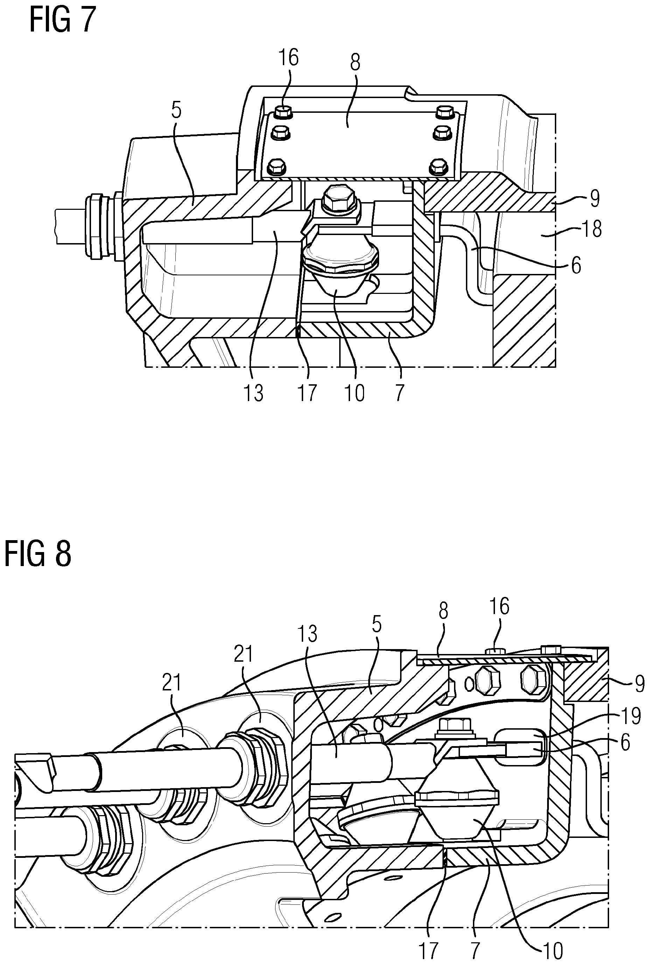

FIG 7 zeigt dies beispielhaft aus einer anderen Perspektive, wie insbesondere die Wicklungsanschlussleitungen 6 aus dem Wickelkopf 18 der dynamoelektrischen Maschine 1 in den Klemmenkasten 23 ragen. Aus dem Wickelkopf 18 ist dabei eine Wickelkopfanschlussleitung 6, in diesem Fall als Schiene ausgeführt und S-förmig geschwungen in den Klemmenkasten 23 geführt. Die S-Form dient der Dämpfung von Stößen, als auch der Einhaltung von Isolationsabständen. Die Wicklungsanschlussleitungen 6 sind innerhalb oder im Bereich des Wickelkopfes 18 mit dementsprechenden Anschlüsse der Wicklung kontaktiert, insbesondere gelötet.

Bei Einsetzen des Schalenelementes 7 in das Gehäuse 9 des Stators 3 werden vorhandene Spalte zwischen den Öffnungen des Schalenelementes 7 und den Wicklungsanschlussleitungen 6 abgedichtet. Des Weiteren wird die axial betrachtet offene Stirnseite des Schalenelementes 7 durch das Lagerschild 5 ebenfalls durch eine Abdichtung 17 abgedichtet.

Erfindungsgemäß kann nun einfach eine Anschlussleitung 13 durch Lösen der Verschraubungen des Deckels 8 ausgetauscht bzw. neue Anschlüsse vorgenommen werden. Dies geschieht ohne Demontage des Lagerschildes 5.

In einer weiteren perspektivischen Darstellung des Klemmenkastens 23 sind in FIG 8 drei Anschlussleitungen 13 in den Klemmenkasten 23 geführt und dort mit ihren jeweiligen externen Wicklungsanschlussleitungen 6 kontaktiert. Die Kontaktstellen sind jeweils durch Isolatoren 10 auf dem Schalenelement 7 abgestützt. Zwischen Lagerschild 5 und Schalenelement 7 befindet sich eine Abdichtung 17 ebenso zwischen den Durchführungen der Wicklungsanschlussleitungen 6 am Schalenelement 7.

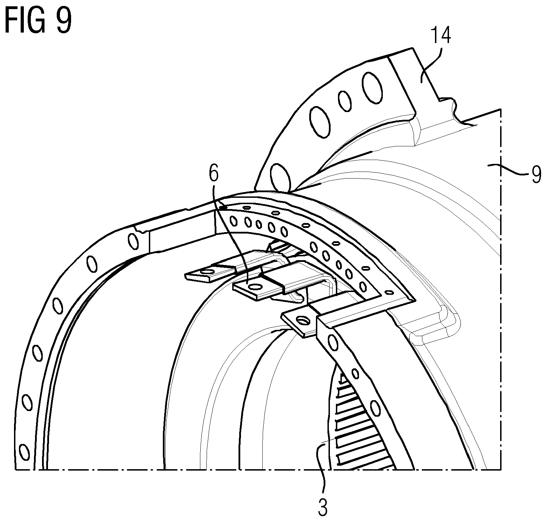

FIG 9 zeigt in einer anderen Darstellung das Gehäuse 9 der dynamoelektrischen Maschine 1, bei dem lediglich die Wicklungsanschlussleitungen 6 aus dem Wicklungssystem 2 des Stators 3 der dynamoelektrischen Maschine 1 axial ragen. Im Gehäuse 9 ist dabei eine Aussparung vorgesehen, in die später das Schalenelement 7 eingesetzt wird.

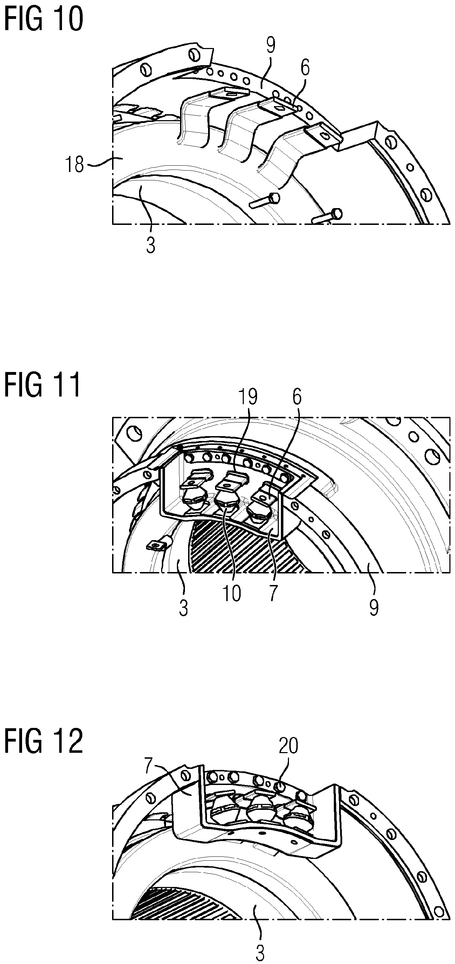

FIG 10 zeigt in einer weiteren Darstellung diese Aussparung am Gehäuse 9 der dynamoelektrischen Maschine 1 und den Austritt der Wicklungsanschlussleitungen 6 aus dem Wicklungssystem 2 des Stators 3.

FIG 11 zeigt in einem nächsten Schritt des Zusammensetzens des Klemmenkastens 23 das Einsetzen des Schalenelementes 7 in die Aussparung am Gehäuse 9 und dessen Befestigung mittels Verschraubungen 20 am Gehäuse 9. Die Wicklungsanschlussleitungen 6 werden durch Durchführungen 19 in dem Schalenelement 7 zu den Isolatoren 10 geführt.

FIG 12 zeigt in einer weiteren Darstellung, wie sich das Schalenelement 7 bezüglich seiner äußeren und inneren Gestaltung an die Statorbohrung bzw. den äußeren Durchmesser des Gehäuses 9 anpasst. Dies führt zu einem kompakten Aufbau der Maschine 1 bei Einhaltung der erforderlichen Abstände zu einem Rotor.

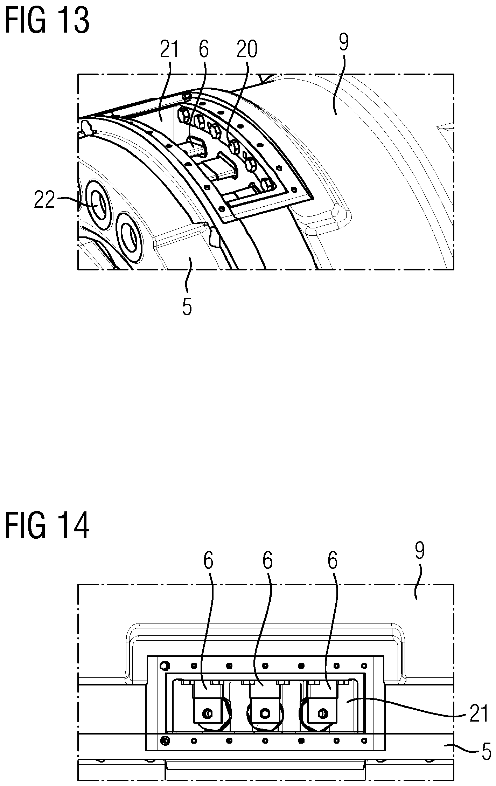

FIG 13 zeigt im zusammengebauten Zustand den offenen Klemmenkasten 23, d.h. das Lagerschild 5 ist nunmehr ergänzt und an das Schalenelement 7 bzw. Gehäuse 9 axial angesetzt worden. Es stellt sich nunmehr eine radiale Öffnung 21 des Klemmenkastens 23 dar, über die in einfacher Art und Weise gemäß FIG 14 - radial betrachtet - externe Anschlussleitungen 13 axial über Öffnungen 22 im Lagerschild 5 einsetzbar sind und über die radiale Öffnung 21 mit den Wicklungsanschlussleitungen 6 kontaktierbar sind.

Derartige kompakte dynamoelektrische Maschinen 1 eignen sich für Fahrzeugantriebe aller Art, wie sie bei elektrischen Bahne, Mining-Trucks oder E-Bussen zum Einsatz kommen. Ebenso sind dies Maschinen 1 als Antriebe von Werkzeugmaschinen geeignet.

Dabei sind diese kompakten dynamoelektrischen Maschinen 1 in die jeweiligen Kühlkonzepte eines gesamten Antriebs, also Maschine 1 und nicht näher dargestelltem Umrichter und/oder einer Gesamtanlage mit Antrieb und Arbeitsmaschine integrieren.

## Patentansprüche

1. Rotatorische dynamoelektrische Maschine (1) mit einem einoder mehrphasigen Wicklungssystem (2), das in einem Stator (3) angeordnet ist, wobei zumindest dessen Wicklungsanschlussleitungen (6) in einen Klemmenkasten (23) geführt sind und dort mit externen Anschlussleitungen (13) kontaktierbar sind, wobei sich der Klemmenkasten (23) im Bereich der Stirnseite des Stators (3) befindet, in ein Gehäuse (9) des Stators (3) eingelassen ist und sich axial zwischen Stator (3) und einem Lagerschild (5) angeordnet ist.

2. Rotatorische dynamoelektrische Maschine (1) nach Anspruch 1, **dadurch gekennzeichnet , dass** der Klemmenkasten (23) durch ein am Gehäuse (9) des Stators (3) befindlichen Schalenelement (7), dem Lagerschild (5) und einem Deckel (8) gebildet ist.

3. Rotatorische dynamoelektrische Maschine (1) nach Anspruch 2, **dadurch gekennzeichnet, dass** sich das Schalenelement (7) des Klemmenkastens (23) in einer Aussparung des Gehäuses (9) an einer Stirnseite des Stators (3) befindet.

4. Rotatorische dynamoelektrische Maschine (1) nach einem der vorhergehenden Ansprüche, **dadurch gekennzeichnet, dass** die Wicklungsanschlussleitungen (6) durch zumindest einen Isolator (10) am Schalenelement (7) abgestützt sind.

5. Rotatorische dynamoelektrische Maschine (1) nach einem der vorhergehenden Ansprüche, **dadurch gekennzeichnet, dass** die Wicklungsanschlussleitungen (6) des Wicklungssystems des Stators (3) bis in den Klemmenkasten (23) als Schienen ausgeführt sind.

6. Rotatorische dynamoelektrische Maschine (1) nach einem der vorhergehenden Ansprüche, **dadurch gekennzeichnet, dass** die externen Anschlussleitungen (13) axial in den Klemmenkasten (23) geführt sind, insbesondere durch das Lagerschild (5) geführt sind.

7. Dynamoelektrische Maschine (1) nach einem der vorhergehenden Ansprüchen, **dadurch gekennzeichnet, dass** die rotatorische dynamoelektrische Maschine (1) eine durchzugsbelüftete und/oder eine mit einem Innenkühlkreis versehene Maschine (1) ist, wobei je nach Anwendungsfall die Lagerschilde (5) mit dementsprechenden Öffnungen ausgestattet sind.

8. Verwendung einer dynamoelektrischen Maschine (1) nach einem der vorhergehenden Ansprüche, bei Fahrzeugantrieben in Mining-Anwendungen und elektrischen Bahnen als auch im Werkzeugmaschinenbau.
